# FASCICULE DE BREVET EUROPEEN

(11) **EP 2 341 469 B1**
(45) Date de publication et mention de la délivrance du brevet: **19.06.2013**
(21) Numéro de dépôt: 11156812.7
(22) Date de dépôt: 30.09.2009
(51) Int. Cl.: G06K 19/07, G06K 19/077

(54) **Système électronique et gestion des communications sans contact concurrentes dans un tel système**
Elektronisches System und Verfahren zum Management von konkurrierenden kontaktlosen Kommunikationen im System
Electronic system and contactless communications management contributing to such system

(30) Priorité: 02.10.2008 FR 0856682
(43) Date de publication de la demande: 06.07.2011
(62) Demande divisionnaire de: 09171869.2
(73) Titulaire: Oberthur Technologies, 92300 Levallois-Perret (FR)
(72) Inventeur: Libotte, Fabrice, 92130 Issy les Moulineaux (FR)
(74) Mandataire: Le Tourneau, Augustin

(56) Documents cités:
- DE-A1- 19 719 657
- US-A- 5 206 495
- US-A1- 2004 232 248
- US-A1- 2005 212 690
- FORD R ET AL: "METHOD FOR AUTOMATIC RF SWITCHING BASED ON PRESENCE OF ANTENNA", MOTOROLA TECHNICAL DEVELOPMENTS, MOTOROLA INC. SCHAUMBURG, ILLINOIS, US, vol. 19, 1 juin 1993 (1993-06-01), pages 25-26, XP000361458, ISSN: 0887-5286

## Description

La présente invention concerne un dispositif électronique muni de moyens de communication sans contact et un procédé de gestion de tels moyens. L'invention s'applique notamment à des cartes à puce sans contact selon la technologie d'identification radiofréquence (RFID - *Radiofrequency Identification*), par exemple selon la norme de communication à champ proche (NFC - *Near Field Communication*).

Les cartes à puce, exemples d'entité électronique portable, communiquent traditionnellement avec un équipement externe au travers d'une interface de communication utilisant des contacts électriques, nommés C1-C8, conformes à la norme ISO/IEC 7816.

Afin de réduire les manipulations nécessaires à l'utilisation de ces contacts électriques, des cartes munies d'interfaces de communication sans contact (ou sans fil), principalement selon la technologie dite RFID, ont été développées. La norme ISO/IEC 14443 a été mise en place pour définir de telles interfaces et s'applique maintenant aux communications en champ proche, dites NFC (*"Near Field Communication"* selon la terminologie anglo-saxonne).

On connaît ainsi, du document WO 2008/028841, des cartes à puce à deux interfaces dites *"dual interface"* dotées à la fois des contacts électriques traditionnels d'alimentation électrique et de communication, et d'une interface supplémentaire de communication sans contact. Cette dernière peut notamment être constituée d'un contrôleur porté sur le module à circuit intégré de la carte et d'une antenne intégrée dans le corps de cette carte et reliée au contrôleur.

En utilisation, l'interface par contact est prévue pour communiquer avec l'équipement hôte recevant physiquement la carte, alors que l'interface sans contact permet de communiquer avec un autre équipement approché de la carte.

La publication US 5 206 495 décrit également une carte à puce "*dual interface*" dont des mécanismes internes de commutation permettent de sélectionner soit une interface de communication par contact, soit une interface de communication sans contact pour effectuer des transmissions. La décision est prise en comparant les tensions sur l'une et l'autre des interfaces.

On connaît également les cartes à puce, par exemple des cartes SIM ("*Subscriber Identity Module*") de téléphonie mobile, qui tirent partie des interfaces de communication sans contact des équipements, ici téléphones, qui les intègrent. Ces cartes sont uniquement dotées d'une interface par contacts électriques mais sont compatibles au format NFC ou équivalent et utilisent, via les contacts électriques C1-C8, généralement C6 pour le protocole SWP (protocole à simple fil - "*Simple Wire Protocole*") ou C4-C8 pour tout autre protocole, le circuit sans contact de type NFC propre au téléphone afin de communiquer avec d'autres équipements externes proches.

Or, dans certaines configurations, une carte à puce "*duel interface*" est utilisée dans un équipement doté, lui aussi, d'un circuit sans contact de type NFC. Cette situation peut générer des conflits de circuits pour le processeur de la carte qui peut "voir" plusieurs circuits de communication sans contact, mais également générer des conflits de signaux résultant d'une perturbation (électromagnétique) réciproque des signaux sans contact émis par les deux interfaces, et dégradant toute communication sans contact avec des équipements externes. Ce conflit d'interfaces est d'autant plus important qu'elles utilisent une même fréquence de transmission et un même protocole de communication.

La présente invention a pour but de résoudre les problèmes précités en vue de permettre l'utilisation d'un dispositif électronique doté d'une interface sans contact dans un équipement hôte également doté d'une telle interface.

La présente invention vise notamment un dispositif électronique tel que défini dans la revendication 1,

Ainsi, selon l'invention, lorsque le dispositif peut utiliser les moyens de communication sans contact d'un équipement hôte (auquel il est connecté), on désactive sa propre interface sans contact au profit de celle de l'équipement hôte. On évite ainsi que les deux interfaces sans contact fonctionnent en même temps. Il en résulte des communications sans contact dépourvues d'interférence ou de perturbation électromagnétique causées par l'interface sans contact du dispositif même.

Les moyens de communication sans contact sont par exemple des moyens de communication courte portée (typiquement d'une portée inférieure à 20 cm, par exemple inférieure à 10 cm) comme décrit dans la suite. Il pourrait toutefois s'agir d'autres types de communication sans contact, par exemple ceux utilisant une antenne dans un système de géolocalisation de type GPS.

L'interaction peut se manifester sous la forme d'une simple connexion physique ou encore sous la forme d'une activité de communication circulant entre les moyens externes et le moyen de connexion, comme décrit ci-après.

Dans un mode de réalisation de l'invention, lesdits moyens d'inhibition comprennent des moyens de routage aptes à router, en fonction de l'état d'inhibition, les signaux de communication entre l'unité de traitement et le premier équipement externe vers ledit moyen de connexion et les moyens externes de communication connectés, ou vers lesdits premiers moyens de communication. Notamment, ces moyens de routage peuvent revêtir la forme d'un commutateur. Grâce à cette disposition, on réalise conjointement les fonctions d'inhibition et de gestion des communications, afin d'envoyer celles-ci sur l'interface adéquate de transmission sans contact.

Selon une caractéristique possible, lesdits moyens d'inhibition sont intégrés aux premiers moyens de communication.

Selon une variante, lesdits moyens d'inhibition peuvent être externes auxdits premiers moyens de communication. Cette réalisation permet d'utiliser des interfaces de communication sans contact non modifiées, par exemple des circuits sans contact de type NFC traditionnels.

Dans un mode de réalisation, l'unité de traitement comprend des moyens de détermination aptes à déterminer, à partir de données de configuration reçues dudit deuxième équipement, au moins une indication représentative de la présence ou non de moyens de communication sans contact dans ledit deuxième équipement, et à commander lesdits moyens de routage en fonction de ladite indication déterminée. La transmission des données de configuration par le deuxième équipement, par exemple un téléphone portable intégrant le dispositif sous forme de carte SIM, peut notamment faire partie d'un processus d'identification et d'initialisation de ce dispositif, lors de la mise sous tension du dispositif. Grâce à cette disposition, la mise en oeuvre de l'inhibition ne nécessite pas de traitement supplémentaire.

Selon une alternative, on peut prévoir des moyens de détermination aptes à écouter ledit moyen de connexion de sorte à détecter au moins un signal émis par des moyens externes de communication sans contact connectés, et à commander lesdits moyens de routage en fonction de ladite écoute. L'inhibition obtenue par ces moyens reflète ainsi la présence réelle et physique de moyens communiquant sans contact opérationnels. Un corollaire à cette configuration est que les moyens externes de communication sans contact émettent un signal, continu ou périodique, représentatif de l'activation de ces moyens, sur une ligne commune avec ledit moyen de connexion afin que le moyen de détermination puisse détecter ce signal.

On peut également prévoir que cette configuration soit combinée avec l'utilisation des données de configuration comme décrite ci-dessus. L'écoute permet en effet un suivi dans le temps de l'état de disponibilité de l'interface externe sans contact et donc d'adapter (mise à jour) l'inhibition et les moyens de routage (commutateur) en conséquence.

En particulier, l'écoute peut consister à recevoir des données émises par des moyens externes de communication et à les analyser le cas échéant pour déterminer, par exemple la présence d'un protocole de communication sans fil.

En particulier, les moyens de détermination aptes à écouter peuvent être intégrés auxdits premiers moyens de communication sans contact.

Selon une caractéristique particulière, les moyens de routage peuvent comprendre un commutateur commandé à trois états apte à connecter, selon ledit état, deux à deux, l'unité de traitement, le moyen de connexion et les premiers moyens de communication sans contact. En particulier, on peut prévoir un jeu de contacts électriques connectés à un module, par exemple supportant l'unité de traitement et les premiers moyens de communication sans contact, et aptes à être raccordés par contact audit deuxième équipement externe, et le commutateur peut alors prendre un état connectant ledit moyen de connexion et les moyens de détermination lorsque ledit module est alimenté électriquement au travers d'au moins un desdits contacts de telle sorte que ledit moyen de détermination écoute ledit moyen de connexion. Cet état de commutation permet notamment aux moyens de détermination d'écouter efficacement le canal de connexion avec les moyens externes de communication sans fil qui sont à détecter. En particulier, cet état de commutation est prévu lors de la mise sous alimentation du dispositif, par exemple la mise sous tension d'un téléphone comprenant une carte SIM selon l'invention. On peut également prévoir que cet état soit répété périodiquement (hors période de communication effective passant par le commutateur) afin de confirmer régulièrement la disponibilité des moyens externes de communication sans fil. On détecte ainsi notamment la mise hors tension des moyens de communication sans contact à l'intérieur du téléphone portable.

Selon une autre caractéristique particulière, on peut prévoir un jeu de contacts électriques connectés à un module, par exemple supportant l'unité de traitement et les premiers moyens de communication sans contact, et aptes à être raccordés par contact audit deuxième équipement externe, et les moyens de routage peuvent alors prendre en l'absence d'alimentation électrique via lesdits contacts, un état connectant ladite unité de traitement et lesdits premiers moyens de communication. Cette configuration correspond, par exemple, au cas d'un téléphone portable éteint intégrant un dispositif, ici une carte SIM "*dual interface*", conforme à l'invention. Grâce à cette disposition, on s'assure que la carte SIM est opérationnelle via uniquement son circuit sans contact interne, dès lors que l'équipement hôte est éteint.

Afin d'assurer un retour automatique à cet état de commutation, on peut prévoir qu'un commutateur agissant comme routeur dispose de cet état par défaut (c'est-à-dire en l'absence d'alimentation).

Dans un mode de réalisation, ladite unité de traitement et les premiers moyens de communication communiquent selon le protocole à simple fil (ou SWP).

Dans un autre mode de réalisation, ledit moyen de connexion comprend au moins une borne de contact électrique. En particulier, la borne de contact électrique peut comprendre une borne de contact électrique de type C6 conforme à la norme ISO/IEC 7816, supportant le protocole à simple fil (SWP). Dans cette configuration, les données à transmettre sans contact sont routées au niveau de la borne C6 et dans le format SWP vers les moyens externes de communication sans contact où ils sont effectivement transmis par ondes électromagnétiques sans contact.

En variante, ladite au moins une borne de contact électrique comprend des bornes de contact électrique de type C4 et C8 conformes à la norme ISO/IEC 7816, supportant un protocole choisi parmi le protocole USB et le protocole S2C. Cette configuration favorise la transmission haut débit des données vers les moyens externes de communication sans contact.

En variante du mode de réalisation avec contact électrique, ledit moyen de connexion est agencé pour réaliser une connexion sans contact avec ledit deuxième équipement externe. Cette connexion sans contact est distincte de celles établies par les premiers moyens de communication sans contact et peut être de type inductive ou capacitive.

Dans un mode de réalisation, les premiers moyens de communication et les moyens externes de communication fonctionnent selon un même protocole et une même fréquence.

Selon une caractéristique envisageable, l'unité de traitement et les premiers moyens de communication sans contact communiquent, entre eux, au travers du protocole à simple fil SWP. Dans cette configuration, on peut utiliser un dispositif, type carte à puce, avec une interface combinant les protocoles ISO 7816 et SWP prévue pour fonctionner avec une antenne seulement dans l'équipement hôte, notamment un téléphone mobile.

Dans un mode de réalisation, les premiers moyens de communication et les moyens externes de communication fonctionnent selon un protocole de communication sans contact de courte portée. En particulier, les premiers moyens de communication et les moyens externes de communication peuvent fonctionner selon le protocole de communication en champ proche, dit NFC. Selon un caractéristique particulière, ladite courte portée est inférieure à un mètre, en particulier inférieure à 30 cm.

Selon une mise en oeuvre de l'invention, le dispositif peut être une carte à circuit intégré, par exemple une carte à mémoire ou une carte à puce (notamment une carte dite UICC). La carte UICC ("*Universal Integrated Circuit Card"*) peut notamment consister en une carte SIM ou une carte USIM ("*Universal SIM*"). En particulier, ladite carte à circuit intégré est au format ID-000.

Dans un mode de réalisation, ladite unité de traitement et les premiers moyens de communication forment un même composant électronique monté sur ledit module. Ce composant commun est généralement monté sur le dos (partie enfouie dans une cavité du corps de carte à puce) d'une vignette composant le module. En variante, ces moyens peuvent être montés, sur une couche de PVC portant l'antenne, selon la technique dite de "flip chip" et largement connue de l'homme du métier.

Notamment, on prévoit que le dispositif comprend une antenne reliée auxdits premiers moyens de communication, et un corps enfermant ladite antenne et pourvu d'une cavité pour accueillir ledit module.

L'invention vise également un ensemble de communication comprenant un dispositif électronique tel que présenté ci-dessus, un équipement hôte muni desdits moyens externes de communication sans contact et apte à intégrer ledit dispositif électronique.

Corrélativement, l'invention a également trait à un procédé de gestion de communication d'un dispositif électronique tel que défini dans la revendication 15.

Un tel procédé peut éventuellement comprendre, en outre, des étapes se rapportant aux caractéristiques optionnelles présentées ci-dessus en termes de dispositif.

D'autres particularités et avantages de l'invention apparaîtront encore dans la description ci-après, illustrée par les dessins ci-joints, dans lesquels :
- la **figure 1** est une vue de dessus montrant en transparence un exemple de disposition d'un module de circuit intégré et d'une antenne boucle au sein d'une carte à puce sans contact ;
- la **figure 2** est une vue de dessus de la carte de la **figure 1** montrant les contacts électriques affleurant celle-ci;
- la **figure 3** représente schématiquement un téléphone mobile équipé de la carte à puce des figures précédentes ;
- la **figure 4** représente des blocs fonctionnels illustrant un premier exemple de réalisation de l'invention ;
- la **figure 5** représente, sous forme de logigramme, les étapes du procédé de l'invention pour une carte selon l'exemple de la **figure 4** **;**
- la **figure 6** représente, sous forme de logigramme, les étapes d'un deuxième exemple de procédé de l'Inventlon ;
- la **figure 7** représente des blocs fonctionnels illustrant un deuxième exemple de réalisation de l'invention ;
- la **figure 8** représente des blocs fonctionnels illustrant un troisième exemple de réalisation de l'invention ; et
- la **figure 9** représente des blocs fonctionnels illustrant un quatrième exemple de réalisation de l'invention.

L'invention concerne un dispositif électronique notamment de type portable ou de poche. A titre d'exemple, un tel dispositif peut revêtir la forme d'une carte à puce, d'une clé USB ("*Universal Serial Bus*"), ou encore d'une carte mémoire type SD ("*Secure Digital*") ou MMC ("*Multimedia Memory Card*")*.*

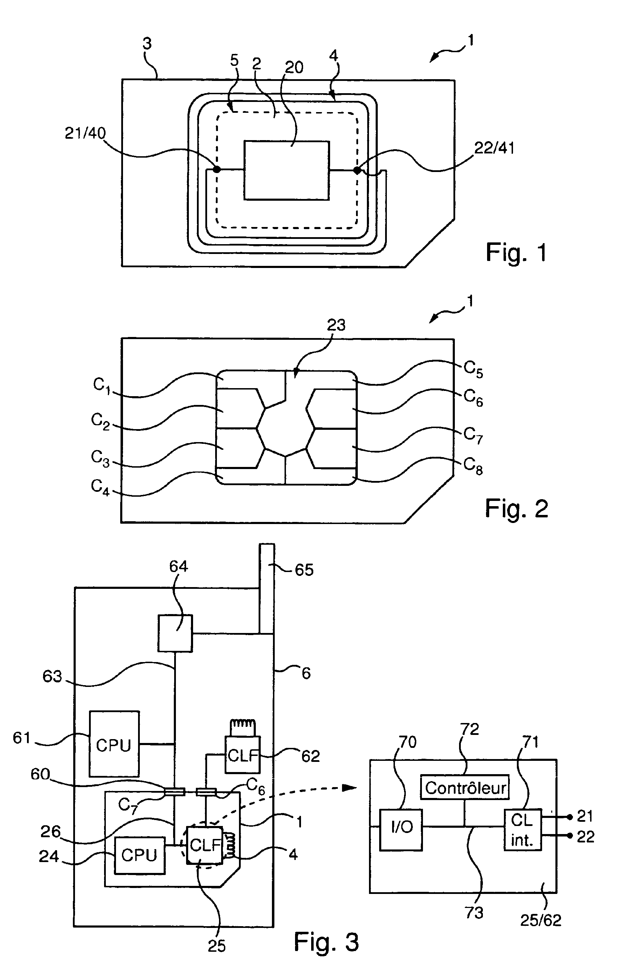

Comme montré sur la **figure 1**, un dispositif électronique 1, ici une carte à puce "*dual interface*" c'est-à-dire combinant une interface de communication sans contact et une interface de communication par contacts électriques, comporte un corps 3 plat, flexible, en plastique de type carte SIM au format ID-000, et d'une épaisseur d'environ 0,76 mm. Le corps 3 renferme dans une cavité 5, un module 2 à circuit intégré 20, notamment de type module sécurisé, et, dans son épaisseur, une antenne 4 inductive destinée à la fois à échanger des informations et recevoir l'énergie nécessaire au fonctionnement du module 2 par couplage électromagnétique avec un équipement de lecture extérieur.

L'antenne 4 est par exemple accordée sur une fréquence d'environ 13,56 Mhz, conformément à la norme ISO 14443, en particulier de type NFC à courte portée, typiquement de 1 à 3 décimètres, par exemple 20 cm. Sa partie inductive est formée de spires conductrices, par exemple en cuivre photogravé, portées par les deux côtés d'un film isolant appelé couramment inlay, placé en sandwich entre deux feuilles de polymères PVC, PET ou autres pour réaliser par laminage à chaud le corps 3 de carte. Les spires conductrices de l'antenne se terminent par des plages conductrices 40, 41 reportées sur un même côté du film isolant grâce à un pontage auxiliaire et positionnées dans la cavité 5.

Le module 2 comporte un substrat support couramment appelé vignette supportant, sur sa face tournée (son dos) vers le fond de la cavité, le ou les circuits intégrés 20, les plages conductrices de raccordement d'antenne 21, 22 venant en regard de celles 40, 41 de l'antenne.

Le substrat du module 2 présente, comme illustré sur la **figure 2**, sur sa face opposée au fond de la cavité 5, un jeu de contacts électriques 23 affleurant la carte 1, accessibles de l'extérieur de la carte 1 et disposés conformément à la norme ISO 7816-2, c'est-à-dire huit bornes C1-C8, rendant également possible un raccordement par contacts avec un équipement hôte aux fins d'alimentation électrique et de communication (par exemple lecture).

Les contacts C1 et C5 servent à l'alimentation électrique du module 2, le premier recevant Vcc et le second étant mis à la masse Ground.

La communication selon la norme ISO/IEC 7816 est réalisée au travers des bornes C2, C3 et C7, recevant respectivement un signal d'horloge (CLK), un signal de réinitialisation (RST) et un signal d'entrée-sortie (I/O).

La borne C6, connue sous le nom d'entrée de tension de programmation, est ici dédiée, pour certains modes de réalisation, à la communication avec l'équipement hôte selon le protocole SWP. Elle est classiquement utilisée par des puces à contacts électriques pour communiquer avec des circuits sans contact, type NFC, dotant l'équipement hôte.

Les bornes C4 et C8 sont généralement non affectées. Dans un mode de réalisation de l'invention, on prévoit d'utiliser ces deux bornes pour réaliser des communications, avec l'équipement hôte, selon le protocole USB ("*Universal Serial Bus*") ou S2C ("*Sigln SigOut Connection*").

La **figure 3** est une représentation fonctionnelle de la carte 1 lorsqu'elle est intégrée dans un équipement hôte 6, tel qu'un téléphone portable.

Parmi les circuits intégrés 20, on distingue un processeur de traitement CPU 24 de type SIM réalisant les opérations classiques de téléphonie mobile et un module de gestion CLF 25 (pour "*ContactLess Frontend*") des communications sans contact, de préférence de type NFC. Ce module CLF 25 associé à l'antenne 4, prévue dans le corps de la carte 1, constituent un circuit sans contact de type NFC incorporant notamment des microcomposants tels que des condensateurs pour assurer des fonctions de polarisation et d'accord d'antenne.

Pour gérer les communications, le circuit sans contact NFC 25 comporte également des moyens de conversion convertissant le courant induit créé par l'antenne 4 (lorsque le dispositif est soumis à un champ électromagnétique d'un équipement externe) en des données numériques transmises par exemple au processeur 24, et les données numériques reçues du processeur 24 en modulations de charge du circuit d'antenne afin d'envoyer des données au lecteur externe sous forme de signal électromagnétique.

Les données transitant par une telle interface 25 sans contact sont, ci-après, nommées "données sans contact".

Les circuits intégrés distincts 24, 25 sont reliés par un bus de données 26 vers une interface de communication par contact incluant des contacts 23, par exemple C7. En variante au bus de données, des connexions électriques directes entre les différents composants peuvent être mises en oeuvre. Le module de gestion CLF 25 est, quant à lui, directement connecté au contact C6 par un fil électrique.

En variante, le processeur 24 et le module de gestion 25 peuvent être intégrés dans un même circuit 20.

L'équipement hôte 6 est, pour sa part, doté (de façon non exhaustive) d'une interface de communication 60 correspondante à celle des contacts 23, d'une unité centrale de traitement 61 doté des moyens logiciels classiques d'un téléphone mobile, d'un circuit CLF sans contact de type NFC 62, d'un bus de données d'interconnexion 63 et de moyens d'alimentation électrique (de type batterie, non représentés) de ces différents composants. Le circuit CLF 62, de fonction identique au circuit NFC 25, est en particulier relié uniquement à une borne de contact faisant face au contact C6 de la carte 1.

L'équipement 6 comprend également des moyens classiques, ici un microcontrôleur 64 et une antenne GSM 65, pour communiquer via un réseau de téléphonie mobile. L'équipement est préférentiellement un téléphone mobile.

Lorsque l'on met sous tension l'équipement hôte 6, celui-ci alimente la puce 1 au niveau des contacts C1 et C5 et dialogue avec celle-ci selon la norme ISO 7816 par les contacts C2, C3 et C7 (ci-après représenté uniquement par C7 pour des raisons de simplification).

Un circuit CLF sans contact 25, 62 comprend notamment une interface d'entrée/sortie 70 avec le bus de données correspondant 26, 63, une interface d'émission/réception 71 des données sans contact associée à une antenne (on a représenté ici uniquement les plages conductrices 21 et 22 dans le cas du module CLF 25) qui démodule notamment le signal radiofréquence reçu sur l'antenne, un contrôleur 72 et un bus de données 73 interconnectant ces différents éléments.

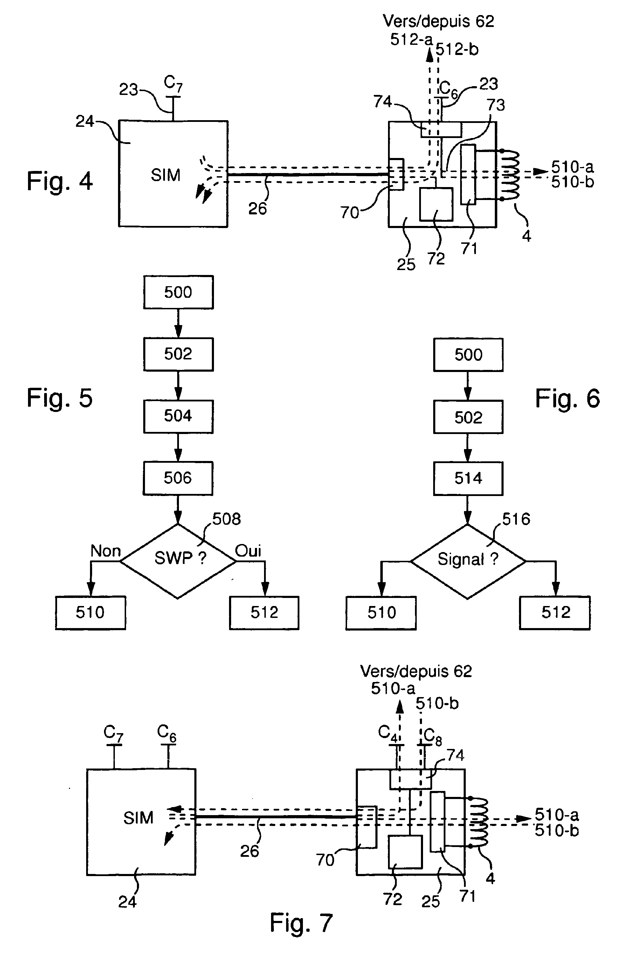

La **figure 4** représente un premier exemple de l'invention. On précise ici que l'invention concerne la gestion des données sans contact, la carte 1 continuant à dialoguer avec l'équipement hôte 6 de façon standard via le contact C7.

Le processeur SIM 24 est directement relié à la borne 23 de type C7 pour dialoguer selon la norme ISO 7816 avec le téléphone hôte 6, lorsqu'il est sous tension.

Le processeur SIM 24 et le module sans contact CLF 25 communiquent au travers du protocole SWP sur le bus 26. Les protocoles SPI ("*Serial Peripheral Interface*") et ISO 7816 peuvent être utilisés à des fins identiques, en variante.

Le module sans contact 25 est en outre relié à la borne 23 de type C6 supportant le protocole SWP.

En fonctionnement, on met sous tension le téléphone 6 à l'étape 500, comme illustré sur la **figure 5****.** Via les contacts C1 et C5, la carte SIM 1 est à son tour mise sous tension à l'étape 502.

Cette mise sous tension déclenche, à l'étape 504, l'initialisation de la communication entre la carte SIM 1 et le téléphone 6 par l'intermédiaire principalement de la borne C7 du protocole ISO 7816.

Cette procédure d'initialisation comprend, à l'étape 506, l'envoi par le téléphone 6 à destination du processeur de traitement 24 de la carte 1, d'un fichier de configuration (sous forme de commande APDU) connu sous l'appellation *"terminal profile".* Ce fichier est prévu par la norme ETSI TS 102.223 et précise notamment au processeur 24 l'ensemble des instructions supportées par le téléphone 6, par exemple des instructions du protocole SWP. On utilise par exemple dans ce but le bit b5 du trentième octet du "*terminal profile*".

En variante, on pourrait utiliser la commande "*TERMINAL CAPABILITY*" prévue dans la norme ETSI TS 102.221 qui permet notamment au téléphone de signaler au processeur 24 de la carte 1 la présence d'un module CLF (bit b1 de l'objet TLV étiqueté 82).

A l'étape 508, le processeur 24 détermine, à partir de ce fichier *"terminal profile",* si le téléphone 6 supporte le protocole SWP ou plus généralement détecte toute information permettant d'identifier si le téléphone 6 est doté de moyens de communication sans contact de type NFC auquel la carte SIM 1 peut avoir accès via le contact C6.

Dans la négative, à l'étape 510, le processeur SIM 24 commande le module de gestion CLF 25 de façon à ce que ce dernier utilise l'interface sans contact interne, c'est-à-dire via l'antenne 4. Classiquement, cet état correspond à l'état par défaut de la carte SIM 1.

Cette situation correspond à un fonctionnement classique de l'interface sans contact d'une carte "*dual interface*" : les signaux sans contact générés par le processeur 24 sont reçus, via le bus 26, par le module de gestion 25 qui les émet en signaux électromagnétiques par l'antenne 4 (flèche 510-a). En réception, les signaux reçus sur cette antenne 4 et numérisés au sein du module de gestion 25 sont transmis, par le bus 26, au processeur SIM 24 pour traitement (flèche 510-b).

Pour commander le module de gestion 25, le processeur 24 peut transmettre, au contrôleur 72, un bit (ou drapeau) représentatif du résultat de l'étape 508, c'est-à-dire indiquant si le téléphone 6 dispose de moyens propres de communication sans contact, ici de type NFC. Le contrôleur 72, au vu de ce bit, assure alors que les messages reçus sur l'interface 70 sont envoyés sur l'interface 71.

En cas de détermination positive à l'étape 508, c'est-à-dire qu'une interaction entre la borne C6 et le circuit CLF 62 est réalisée au travers d'un simple contact électrique, le processeur SIM 24 commande, à l'étape 512, le module de gestion CLF 25 de sorte à ce qu'il route désormais les signaux sans contact vers le contact 23 de type C6, utilisé pour transmettre les signaux SWP de la carte 1 vers les circuits sans contact 62 de type NFC du téléphone hôte 6.

A ce stade, le contrôleur 72 aiguille les signaux entrant sur l'interface 70 vers l'interface 74 prévue au niveau du contact C6 (transmission de données sans contact par l'utilisation des moyens de communication sans contact propres au téléphone- flèche 512-a), et les signaux entrant au niveau de cette interface 74 vers l'interface 70 (réception de données sans contact - flèche 512-b).

Encore une fois, le drapeau représentatif du résultat de l'étape 508 est utilisé par le contrôleur 72 pour réaliser cette fonction de routage de signaux dans le module de gestion 25.

La carte 1 et le téléphone 6 sont ainsi en configuration pour transmettre et recevoir efficacement des données sans contact sans interférences, soit via l'interface NFC 25 si le téléphone est dépourvu d'une telle interface NFC, soit via l'interface NFC 62 lorsque le téléphone en est doté et est sous tension.

Dans une variante illustrée par la **figure 6**, le circuit sans contact NFC 62 du téléphone 6 émet en continu un signal d'activité sur le contact 23 C6 auquel il est connecté, par exemple à l'aide d'énergie électrique fournie par le téléphone 6 ou par l'énergie électrique issue du couplage électromagnétique du circuit NFC 62 avec un lecteur externe (non représenté). Ce signal est conforme à la norme ETSI TS 102-613.

Après la mise sous tension du téléphone 6 (étape 500) et de la carte SIM 1 (étape 502), le module de gestion CLF 25 se met en écoute sur le canal de communication C6, à l'étape 514. Cette écoute peut être prévue pendant un temps prédéterminé, par exemple dix secondes.

A l'expiration de ce délai, le contrôleur 72 détermine, à l'étape 516, si un signal d'activité a été détecté sur le contact C6. En cas de signal détecté, on passe à l'étape 512. En l'absence, on passe à l'étape 510.

Lorsque l'interface NFC 62 est désactivée, par exemple au moyen d'un menu dans le téléphone, l'invention permet alors de détecter efficacement cette désactivation et de basculer sur l'interface NFC 25 interne à la carte 1, alors que le circuit NFC 62 peut toujours être physiquement connecté à la borne C6.

On prévoit également que l'étape 514 peut être reproduite périodiquement, par exemple toutes les cinq minutes (et lorsque aucune transmission ou réception de donnée sans contact n'est en cours), afin de détecter une éventuelle désactivation/activation de l'interface NFC 62, par entrée/sortie dans le champ électromagnétique d'un lecteur externe par exemple. Cette disposition peut alors compléter celle basée sur l'utilisation du fichier "*terminal profile*".

De façon similaire, lorsque la carte SIM 1 est mise hors tension (par exemple extinction du téléphone 6, le contrôleur 72 passe automatiquement dans un état "antenne SIM" similaire à celui de l'étape 510. Ce passage automatiquement peut notamment être déclenché au travers d'un bit de donnée (drapeau) stocké en mémoire vive et représentatif du résultat de l'étape 508 ou de l'étape 516. Ainsi la mise hors tension de la carte 1 efface ce bit, ce que le contrôleur 72 interprète comme une absence de circuit NFC 62. Par défaut, le contrôleur 72 est dans l'état dit "antenne SIM".

Un deuxième exemple de l'invention est représenté en **figure 7****,** et se distingue de celui de la **figure 4** par l'affectation des contacts C1-C8. Ici, les contacts C6 et C7 sont directement reliés au processeur SIM 24, alors que les contacts C4 et C8 sont reliés au module de gestion 25.

Dans cet exemple, le téléphone 6 met à disposition son interface sans contact 62 à une carte à puce intégrée 1 et communique, à cette fin, avec cette dernière au travers des contacts électriques C4 et C8 et du protocole USB. L'aptitude des téléphone 6 et carte 1 à communiquer via le contact C7 et le protocole ISO 7816 demeure.

La détection par la carte 1 de la présence d'une interface sans contact NFC dans le téléphone 6 peut être réalisée comme décrite précédemment: via le fichier *"terminal profile",* par l'écoute du canal USB aux contacts C4 et C8, ou par combinaison des deux.

Les différentes étapes des **figures 5** et **6** s'appliquent donc à cet exemple.

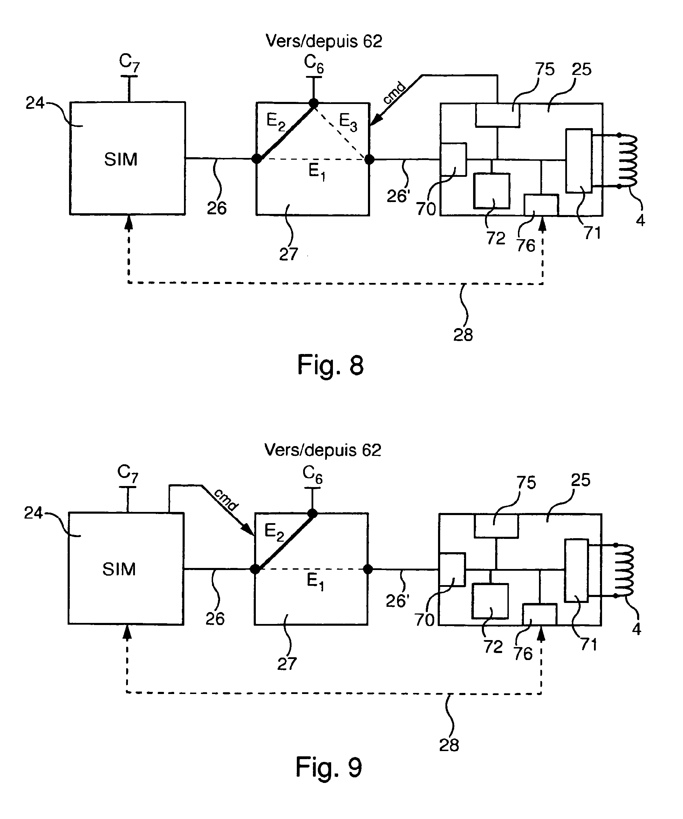

La **figure 8** illustre un troisième mode de réalisation de l'invention.

Cet exemple incorpore un commutateur commandé à trois états 27, interfacé entre le processeur SIM 24 et le module de gestion 25. La troisième entrée du commutateur est formée par le contact C6.

Dans un premier état E1 par défaut du commutateur 27, le processeur SIM 24 est connecté au module de gestion 25 (au niveau de l'interface 70).

Dans un deuxième état E2 (comme représenté sur la figure), le processeur SIM 24 est connecté à la borne 23 de type C6.

Dans le troisième état E3, l'interface 70 du module 25 est connectée à la borne C6.

En l'absence d'alimentation électrique de la carte 1 via les contacts C1 et C5 (c'est-à-dire non intégrée dans un équipement hôte 6, ou ce dernier étant éteint), le commutateur 27 est dans l'état E1 par défaut, qui permet une utilisation classique autonome de la carte "*dual interface*". C'est notamment le cas lorsque le téléphone 6 est éteint et que la carte 1 est dans le champ d'un lecteur qui l'alimente par couplage électromagnétique.

Dès que la carte 1 est mise sous tension au travers des contacts C1 et C5, le commutateur 27 est automatiquement mis dans l'état E3 permettant au contrôleur 72 d'écouter le contact C6. La détection d'un signal d'activité par le module de gestion 25 est opérée comme évoqué ci-dessus (période d'écoute, périodicité, etc.).

En fonction de cette détection, le contrôleur 72 envoie, via une interface 75, un signal de commande au commutateur 27 de sorte à le basculer dans l'état E1 (si aucun signal d'activité n'a été détecté) ou dans l'état E2 (si un tel signal a été détecté).

Le processeur SIM 24 est alors connecté soit au circuit interne NFC 25+4, soit au circuit NFC 62 du téléphone, pour la transmission et la réception de données sans contact.

Dans une variante non représentée, le commutateur est à deux états correspondant aux états E1 et E2 ci-dessus. Pour déterminer si le terminal hôte 6 comprend un circuit NFC 62, le processeur SIM 24 écoute la borne C6 lorsque le commutateur est mis initialement à l'état E2 ou analyse un fichier *"terminal profile"* reçu sur le contact C7. L'information relative à la détection d'un signal d'activité ou à la présence d'un circuit NFC 62 est transmise au contrôleur 72 par un lien série 28 entre le processeur 24 et le module de gestion 25. Le contrôleur 72 commande alors le commutateur 27 en fonction de cette information reçue.

Le lien série 28 permet ici au processeur 24 de désactiver le module de gestion 25 lorsque le terminal hôte 6, ici le téléphone, est muni de moyens de communication sans contact NFC 62.

La **figure 9** illustre un quatrième mode de réalisation, proche de celui de la **figure 8**, si ce n'est que le commutateur 27 est commandé par le processeur SIM 24.

On a représenté ici un commutateur commandé à deux états E1-E2 uniquement puisque, dans cet exemple, la détection du circuit NFC 62 est réalisée par le processeur SIM 24 (via le fichier *"terminal profile"* ou par l'écoute du contact C6 lorsque le commutateur 27 est dans l'état E2).

En fonction du résultat de cette détection, le processeur SIM 24 envoie un signal de commande du commutateur 27 le faisant basculer vers l'état E1 si aucun circuit NFC 62 n'a été décelé, ou vers l'état E2 si un circuit NFC 62 est détecté.

Cet exemple permet d'utiliser les circuits internes NFC 25 déjà conçus puisque aucune modification de ceux-ci n'est nécessaire à la mise en oeuvre de l'invention.

Il est bien entendu que les troisième et quatrième modes de réalisation peuvent être combinés pour notamment offrir une architecture où le processeur SIM 24 commande un commutateur 27 à trois états, l'écoute du contact C6 étant effectuée par le module de gestion 25 qui transmet l'information de détection via le lien série 28.

Ainsi, la carte 1 selon la présente invention permet à la fois d'équiper des téléphones mobiles 6 démunis de moyens de communication sans contact, d'assurer que, si ceux-ci en sont munis, les moyens de communication sans contact n'interfèrent pas l'un avec l'autre, empêchant toute communication efficace, et d'utiliser la carte 1 seule hors du téléphone en communiquant notamment via l'interface interne sans contact de type NFC.

Les exemples qui précèdent ne sont que des modes de réalisation de l'invention qui ne s'y limite pas.

En particulier, on peut prévoir d'utiliser indifféremment le contact C6, les contacts C4 et C8, de nouveaux contacts électriques affleurants non prévus par la norme ISO 7816 (donc différents de C1-C8) ou des points de connexion sans contact, par exemple de type capacitifs ou inductifs, afin de communiquer les données sans contact avec l'équipement hôte 6.

De même, la fonction de routage mise en oeuvre par le contrôleur 72 dans les deux premiers exemples ci-dessus peut être remplacée par un commutateur interne (à deux ou trois états) commandé par le même contrôleur 72 et qui, selon l'état d'inhibition souhaité, connecte l'interface 70 à l'un des deux interfaces 71 et 74.

Bien que l'on ait dissocié, dans les exemples précédents, le circuit NFC 62 des autres composants du téléphone 6, ce circuit 62 peut être connecté au bus commun 63. En outre, la communication entre ce circuit 62 et la carte à puce 1 peut transiter par le processeur CPU 61.

Selon une fonction d'économie d'énergie, le processeur SIM 24 peut commander la désactivation (ou mis en veille) du circuit interne sans contact de type NFC 25 afin d'interdire la communication sans contact ou d'économiser l'énergie d'alimentation. Cette fonction d'économie d'énergie peut ainsi être employée comme moyen d'inhiber le circuit NFC 25 lorsque le processeur SIM 24 détecte la présence d'un circuit sans contact NFC 62 au sein de l'équipement hôte 6.

Bien que le dispositif 1 utilisant le circuit NFC 25 et le dispositif 1 utilisant le circuit NFC 62 soient décrits ci-dessus dans un mode opératoire passif où un lecteur sans contact externe alimente les circuits NFC respectifs, l'invention s'applique également dans le cas où ces circuits 25 et 62 fonctionnement en mode actif selon la norme NFC, c'est-à-dire lorsqu'ils constituent, eux-mêmes, un lecteur sans contact courte portée.

L'inhibition du module sans contact 25 décrite ci-dessus n'empêche naturellement pas que l'on prévoit en outre la possibilité pour l'utilisateur de désactiver ce module, par exemple à travers un menu du téléphone en modifiant une donnée mémorisée dans la carte 1 et déterminant l'état activé/désactivé du module sans contact 25.

## Revendications

1. Dispositif électronique (1) comprenant une unité de traitement (24) et des premiers moyens de communication sans contact (25) permettant à ladite unité de traitement de communiquer avec un premier équipement externe, **caractérisé en ce que** le dispositif electronique est configuré pour être intégré dans un deuxième équipement externe (6) et **en ce qu'**il comprend :
- un moyen de connexion (C6) apte à être connecté audit deuxième équipement externe (6) intégrant ledit dispositif électronique (1),
- des moyens d'inhibition (27, 72) desdits premiers moyens de communication sans contact lorsque ledit moyen de connexion interagit avec des moyens externes de communication sans contact (62) intégrés audit deuxième équipement, lesdits moyens d'inhibition (27, 72) comprenant des moyens de routage aptes à router, en fonction de l'état d'inhibition, des signaux de communication entre l'unité de traitement (24) et le premier équipement externe vers ledit moyen de connexion (C6) et les moyens externes de communication connectés (62), ou vers lesdits premiers moyens de communication (25), et
- des moyens de détermination, au sein de l'unité de traitement (24), aptes à déterminer, à partir de données de configuration reçues dudit deuxième équipement (6), au moins une indication représentative de la présence ou non de moyens de communication sans contact (62) dans ledit deuxième équipement, et à commander lesdits moyens de routage (27, 72) en fonction de ladite indication déterminée.

2. Dispositif (1) selon la revendication 1, dans lequel lesdits moyens d'inhibition (27, 72) sont intégrés aux premiers moyens de communication (25).

3. Dispositif (1) selon la revendication 1, dans lequel lesdits moyens d'inhibition (27, 72) sont externes auxdits premiers moyens de communication (25).

4. Dispositif (1) selon l'une des revendications 1 à 3, comprenant des moyens de détermination aptes à écouter ledit moyen de connexion (C6) de sorte à détecter au moins un signal émis par des moyens externes de communication sans contact connectés (62), et à commander lesdits moyens de routage (27, 72) en fonction de ladite écoute.

5. Dispositif (1) selon la revendication précédente, dans lequel lesdits moyens de détermination aptes à écouter sont intégrés auxdits premiers moyens de communication sans contact (25).

6. Dispositif (1) selon l'une des revendications 1 à 5, dans lequel lesdits moyens de routage comprennent un commutateur (27) commandé à trois états (E1, E2, E3) apte à connecter, selon ledit état, deux à deux, l'unité de traitement, le moyen de connexion et les premiers moyens de communication sans contact.

7. Dispositif (1) selon la revendication précédente lorsqu'elle dépend de la revendication 5, comprenant un jeu de contacts électriques (C1-C8) connectés à un module (2) et aptes à être raccordés par contact audit deuxième équipement externe (6), et
dans lequel ledit commutateur (27) prend un état (E2) connectant ledit moyen de connexion (C6) et les moyens de détermination (72) lorsque ledit module (2) est alimenté électriquement au travers d'au moins un (E3) desdits contacts de telle sorte que ledit moyen de détermination écoute ledit moyen de connexion.

8. Dispositif (1) selon l'une quelconque des revendications 1 à 7, comprenant un jeu de contacts électriques (C1-C8) connectés à un module (2) et aptes à être raccordés par contact audit deuxième équipement externe (6), et
dans lequel lesdits moyens de routage (27, 72) prennent, en l'absence d'alimentation électrique via lesdits contacts, un état (E1) connectant ladite unité de traitement et lesdits premiers moyens de communication.

9. Dispositif (1) selon l'une des revendications 1 à 8, dans lequel ledit moyen de connexion comprend au moins une borne de contact électrique.

10. Dispositif (1) selon la revendication précédente, dans lequel ladite borne de contact électrique comprend une borne de contact électrique de type C6 conforme à la norme ISO/IEC 7816, supportant le protocole à simple fil (SWP).

11. Dispositif (1) selon l'une quelconque des revendications précédentes, dans lequel les premiers moyens de communication (25) et les moyens externes de communication (62) fonctionnent selon un même protocole et une même fréquence.

12. Disposittf (1) selon l'une quelconque des revendications précédentes, dans lequel l'unité de traitement (24) et les premiers moyens de communication sans contact (25) communiquent, entre eux, au travers du protocole à simple fil SWP.

13. Dispositif (1) selon l'une quelconque des revendications précédentes, dans lequel les premiers moyens de communication (25) et les moyens externes de communication (62) fonctionnent selon le protocole de communication en champ proche, dit NFC.

14. Dispositif (1) selon l'une quelconque des revendications précédentes, **caractérisé en ce que** le dispositif est une carte à circuit intégré universelle dite UICC.

15. Procédé de gestion de communication d'un dispositif électronique (1) comprenant des premiers moyens de communication sans contact (25) permettant de communiquer avec un premier équipement externe, le procédé comprenant les étapes suivantes :
- la détermination (508, 516) d'une interaction entre ledit dispositif électronique (1) et des moyens de communication sans contact (62) d'un deuxième équipement (6) externe audit dispositif électronique (1) et intégrant ledit dispositif électronique (1) ;
- en cas de détermination positive, l'inhibition (512) desdite premiers moyens de communication sans contact (25) de sorte que ledit dispositif (1) communique avec ledit premier équipement au travers des moyens de communication sans contact (62) du deuxième équipement (6),
- le routage, au sein de l'unité du dispositif électronique (1) et en fonction de l'état d'inhibition, de signaux de communication entre une unité de traitement (24) du dispositif électronique et le premier équipement externe vers lesdits moyens de communication sans contact (62) du deuxième équipement (6), ou vers lesdits premiers moyens de communication sans contact (25), et
- la détermination, au sein de l'unité de traitement (24) et à partir de données de configuration reçues dudit deuxième équipement (6), d'au moins une indication représentative de la présence ou non de moyens de communication sans contact (62) dans ledit deuxième équipement, et la commande desdits moyens de routage (27, 72) en fonction de ladite indication déterminée.

## Patentansprüche

1. Elektronische Vorrichtung (1), die eine Verarbeitutungseinheit (24) und erste Mittel zur kontaktlosen Kommunikation (25) umfasst, die es der Verarbeitungseinheit ermöglichen, mit einer ersten externen Ausrüstung zu kommunizieren, **dadurch gekennzeichnet, dass** die elektronische Vorrichtung ausgestaltet ist, in eine zweite externe Ausrüstung (6) integriert zu sein, und dadurch, dass sie Folgendes umfasst;
- ein Verbindungsmittel (C6), das geeignet ist, mit der zweiten externen Ausrüstung (6) verbunden zu sein, in die die elektronische Vorrichtung (1) integriert ist,
- Mittel zum Sperren (27, 72) der ersten Mittel zur kontaktlosen Kommunikation, wenn das Verbindungsmittel mit externen Mitteln zur kontaktlosen Kommunikation (62) interagiert, die in die zweite Ausrüstung integriert sind, wobei die Mittel zum Sperren (27, 72) Routing-Mittel umfassen, die geeignet sind, in Abhängigkeit von dem Sperrzustand Kommunikationssignale zwischen der Verarbeitungseinheit (24) und der ersten externen Ausrüstung in Richtung des Verbindungsmittels (C6) und der verbundenen externen Kommunikationsmittel (62) oder in Richtung der ersten Kommunikationsmittel (25) zu routen, und
- Bestimmungsmittel innerhalb der Verarbeitungseinheit (24), die geeignet sind, ausgehend von von der zweiten Ausrüstung (6) empfangenen Konfigurationsdaten mindestens eine Angabe zu bestimmen, die für das Vorhanden- oder Nichtvorhandensein von Mitteln zur kontaktlosen Kommunikation (62) in der zweiten Ausrüstung charakteristisch ist, und die Routing-Mittel (27, 72) in Abhängigkeit von der bestimmten Angabe zu steuern.

2. Vorrichtung (1) nach Anspruch 1, wobei die Mittel zum Sperren (27, 72) in die ersten Kommunikationsmittel (25) integriert sind.

3. Vorrichtung (1) nach Anspruch 1, wobei die Mittel zum Sperren (27, 72) extern zu den ersten Kommunikationsmitteln (25) sind.

4. Vorrichtung (1) nach einem der Ansprüche 1 bis 3, die Bestimmungsmittel unfasst, die geeignet sind, das Verbindungsmittel (C6) derart abzuhören, dass mindestens ein durch verbundene externe Mittel zur kontaktlosen Kommunikation (62) gesendetes Signal ermittelt wird, und die Routing-Mittel (27, 72) in Abhängigkeit von der Abhörung gesteuert werden.

5. Vorrichtung (1) nach dem vorhergehenden Anspruch, wobei die zum Abhören geeigneten Bestimmungsmittel in die ersten Mittel zur kontaktlosen Kommunikation (25) integriert sind.

6. Vorrichtung (1) nach einem der Ansprüche 1 bis 5, wobei die Routing-Mittel einen Schalter (27) umfassen, der in drei Zustände (E1, E2, E3) gesteuert wird und geeignet ist, die Verarbeitungseinheit, das Verbindungsmittel und die ersten Mittel zur kontaktlosen Kommunikation gemäß dem Zustand paarweise zu verbinden.

7. Vorrichtung (1) nach dem vorhergehenden Anspruch, wenn abhängig von Anspruch 5, umfassend einen Satz elektrischer Kontakte (C1 bis C8), die mit einem Baustein (2) verbunden sind und geeignet sind, durch Kontakt an die zweite externe Ausrüstung (6) angeschlossen zu werden, und
wobei der Schalter (27) einen Zustand (E2) annimmt, der das Verbindungsmittel (C6) und die Bestimmungsmittel (72) verbindet, wenn der Baustein (2) über mindestens einen (E3) der Kontakte mit Strom versorgt wird, derart, dass das Bestimmungsmittel das Verbindungsmittel abhört.

8. Vorrichtung (1) nach einem der Ansprüche 1 bis 7, die einen Satz elektrischer Kontakte (C1 bis C8) umfasst, die mit einem Baustein (2) verbunden sind und geeignet sind, durch Kontakt mit der zweiten externen Ausrüstung (6) verbunden zu werden, und
wobei die Routing-Mittel (27, 72) beim Nichtvorhandensein einer Stromversorgung über die Kontakte einen Zustand (E1) annehmen, der die Verarbritungseinheit und die ersten Kommunikationsmittel verbindet.

9. Vorrichtung (1) nach einem der Ansprüche 1 bis 8, wobei das Verbindungsmittel mindestens eine elektrische Kontaktklemme umfässt.

10. Vorrichtung (1) nach dem vorhergehenden Anspruch, wobei die elektrische Kontaktklemme eine elektrische Kontaktklemme des Typs C6 umfasst, die mit der Norm ISO/IEC 7816 übereinstimmt, die das Single Wire Protocol (SWP) unterstützt.

11. Vorrichtung (1) nach einem der vorhergehenden Ansprüche, wobei die ersten Kommunikationsmittel (25) und die externen Kommunikationsmittel (62) gemäß einem selben Protokoll und einer selben Frequenz arbeiten.

12. Vorrichtung (1) nach einem der vorhergehenden Ansprüche, wobei die Verarbeitungseinheit (24) und die ersten Mittel zur kontaktlosen Kommunikation (25) untereinander über das Simple Wire Protocol (SWP) kommunizieren,

13. Vorrichtung (1) nach einem der vorhergehenden Ansprüche, wobei die ersten Kommunikationsmittel (25) und die externen Kommunikationsmittel (62) gemäß dem sogenannten Nahfeldkommunikationsprotokoll (NFC) arbeiten.

14. Vorrichtung (1) nach einem der vorhergehenden Ansprüche, **dadurch gekennzeichnet, dass** die Vorrichtung eine sogenannte Universal Integrated Circuit Card (U1CC) ist.

15. Verfahren zum Management von Kommunikationen einer elektronischen Vorrichtung (1), die erste Mittel zur kontaktlosen Kommunikation (25) umfasst, die das Kommunizieren mit einer ersten externen Ausrüstung ermöglichen, wobei das Verfahren die folgenden Schritte unfasst;
- das Bestimmen (508, 516) einer Interaktion zwischen der elektronischen Vorrichtung (1) und den Mitteln zur kontaktlosen Kommunikation (62) einer zweiten Ausrüstung (6), die in Bezug auf die elektronische Vorrichtung (1) extern ist und in die die elektronische Vorrichtung (1) integriert ist;
- falls bestimmt wird, dass dies zutrifft, das Sperren (512) der ersten Mittel zur kontaktlosen Kommunikation (25), derart, dass die Vorrichtung (1) über Mittel zur kontaktlosen Kommunikation (62) der zweiten Ausrüstung (6) mit der ersten Ausrüstung kommuniziert,
- das Routen von Kommunikationssignalen zwischen einer Verarbeitungseinheit (24) der elektronischen Vorrichtung und der ersten externen Ausrüstung in Richtung der Mittel zur kontaktlosen Kommunikation (62) der zweiten Ausrüstung (6) oder in Richtung der ersten Mittel zur kontaktlosen Kommunikation (25), innerhalb der elektronischen Vorrichtung (1) und in Abhängigkeit vom Sperrzustand, und
- das Bestimmen mindestens einer Angabe, die für das Vorhanden- oder Nichtvorhandensein von Mitteln zur kontaktlosen Kommunikation (62) in der zweiten Ausrüstung charakteristisch ist, und das Steuern der Routing-Mittel (27, 27) in Abhängigkeit von der bestimmten Angabe, innerhalb der Verarbeitungseinheit (24) und ausgehend von von der zweiten Ausrüstung (6) empfangenen Konfigurationsdaten.

## Claims

1. Electronic device (1) including a processing unit (24) and first contactless communication means (25) enabling said processing unit to communicate with a first external equipment, **characterised in that** the electronic device is configured to be integrated into a second external equipment (6) and **in that** it comprises:
- connecting means (C6) adapted to be connected to said second external equipment (6) integrating said electronic device (1),
- means (27, 72) for inhibiting said first contactless communication means when said connection means interact with external contactless communication means (62) integrated into said second equipment, said inhibition means (27, 72) including routing means adapted, based on said inhibition state, to route communication signals between the processing unit (24) and the first external equipment to said connection means (C6) and the connected external communication means (62) or to said first communication means (25), and
- determination means, within the processing unit (24), adapted to determine, from configuration data received from said second equipment (6), at least one indication representative of the presence or absence of contactless communication means (62) in said second equipment, and to control said routing means (27, 72) as a function of said determined indication.

2. Device (1) according to claim 1, wherein said inhibition means (27, 72) are integrated into the first communication means (25).

3. Device (1) according to claim 1, wherein said inhibition means (27, 72) are external to said first communication means (25).

4. Device (1) according to any of claims 1 to 3, including détermination means adapted to listen to said connection means (C6) to sense at least one signal sent by connected external contactless communication means (62) and to control said routing means (27, 72) as a function of said listening.

5. Device (1) according to the preceding claim, wherein said determination means adapted to perform said listening are integrated into said first contactless communication means (25).

6. Device (1) according to any of claims 1 to 5, wherein said routing means include a switch (27) with three states (E1, E2, E3) adapted to connect the processing unit, the connection means and the first contactless communication means two by two according to said state.

7. Device (1) according to the preceding claim when depending on claim 5, including a set of electrical contacts (C1-C8) connected to a module (2) and adapted to be connected by contact to said second external equipment (6) and wherein said switch (27) assumes a state (E2) connecting said connection means (C6) and the determination means (72) when said module (2) is supplied with electrical power via at least one contact (E3) of said contacts so that said détermination means listen to said connection means.

8. Device (1) according to any of claims 1 to 7, including a set of electrical contacts (C1-C8) connected to a module (2) and adapted to be connected by contact to said second external equipment (6) and wherein, in the absence of electrical power supply via said contacts, said routing means (27, 72) assume a state (E1) connecting said processing unit and said first communication means.

9. Device (1) according to any of claims 1 to 8, wherein said connection means include at least one electrical contact terminal.

10. Device (1) according to the preceding claim, wherein said electrical contact terminal includes a electrical contact terminal of C6 type according to the ISO/IEC 7816 standard, that supports the single wire protocol (SWP).

11. Device (1) according to any of the preceding claims, wherein the first communication means (25) and the external communication means (62) operate using the same protocol and at the same frequency.

12. Device (1) according to any of the preceding claims, wherein the processing unit (24) and the first contactless communication means (25) communicate with each other using the single wire protocol (SWP).

13. Device (1) according to any of the preceding claims, wherein the first communication means (25) and the external communication means (62) operate according to the so-called NFC, near-field communication protocol.

14. Device (1) according to any of the preceding claims, **characterised in that** the device is a universal integrated circuit card (UICC).

15. Method of managing communication of an electronic device (1) including first contactless communication means (25) for communicating with a first external equipment, the method including the following steps:
- determining (508, 516) interaction between said electronic device (1) and contactless communication means (62) of a second equipment (6) external to said electronic device (1) and integrating said electronic device (1);
- in the event of positive determination, inhibiting (512) said first contactless communication means (25) so that said device (1) communicates with said first equipment via contactless communication means (62) of the second equipment (6),
- routing, within the unit of the electronic device (1) and as a function of the state of inhibition, communication signals between a processing unit (24) of the electronic device and the first external equipment to said contactless communication means (62) of the second equipment (6), or to said first contactless communication means (25), and
- determining, within the processing unit (24) and on the basis of configuration data received from said second equipment (6), at least one indication representative of the presence or absence of contactless communication means (62) in said second equipment, and controlling said routing means (27, 72) as a function of said determined indication.
